# FASCICULE DE BREVET EUROPEEN

(11) **EP 1 092 574 B1**
(45) Date de publication et mention de la délivrance du brevet: **07.06.2006**
(21) Numéro de dépôt: 00402526.8
(22) Date de dépôt: 13.09.2000
(51) Int. Cl.: B60J 5/06

(54) **Agencement un rail de guldage d'une porte coulissante de véhicule**
Anordnung einer Führungsschiene einer Fahrzeugschiebetür
Arrangement of a guide rail of a vehicle sliding door

(30) Priorité: 14.10.1999 FR 9912804
(43) Date de publication de la demande: 18.04.2001
(73) Titulaire: Peugeot Citroen Automobiles SA, 92200 Neuilly sur Seine (FR)
(72) Inventeur: Frankinet, Gilles, 27140 Gisors (FR)
(74) Mandataire: De Cuenca, Emmanuel Jaime

(56) Documents cités:
- EP-A- 0 356 373
- EP-A- 0 767 082
- US-A- 4 544 198
- US-A- 5 322 339
- PATENT ABSTRACTS OF JAPAN vol. 008, no. 136 (M-304), 23 juin 1984 (1984-06-23) & JP 59 034924 A (NISSAN JIDOSHA KK;OTHERS: 01), 25 février 1984 (1984-02-25)

## Description

L'invention se rapporte à un agencement d'un rail de guidage d'une porte coulissante de véhicule selon le préambule de la revendication 1. Un tel agencement est décrit dans le document EP-A-0 356 373.

Des agencements connus de portes coulissantes comportent un rail de guidage inférieur dans lequel se déplace un chariot solidaire de la porte. Classiquement, le rail est cintré vers l'intérieur du véhicule et, à cet effet, on ménage une ouverture dans la partie inférieure de la structure du véhicule, pour permettre le passage d'une partie du rail. En particulier, lorsque la porte est amenée en position fermée, le chariot guidé par le rail vient traverser la structure du véhicule.

Ce type d'agencement présente de nombreux inconvénients. En effet, l'ouverture réalisée dans la structure pose des problèmes d'étanchéité vis-à-vis de l'extérieur, qui entraînent une corrosion de la structure métallique du véhicule.

Pour résoudre ce problème, la structure du véhicule est conformée de façon à former des parois qui entourent la partie du rail qui traverse la structure. L'étanchéité de l'ensemble est assurée par masticage.

Cependant, les opérations de ferrage et de mastiquage de cet agencement sont longues et fastidieuses. Par ailleurs, l'étanchéité obtenue s'avère peu satisfaisante.

Un but de la présente invention est de proposer un agencement d'un rail de guidage d'une porte coulissante de véhicule, palliant tout ou partie des inconvénients de l'art antérieur relevés ci-dessus.

Ce but est atteint par un agencement selon la revendication 1.

Par ailleurs, l'invention peut comporter l'une ou plusieurs des caractéristiques suivantes :
- le boîtier est constitué d'un matériau plastique souple ou rigide, ou d'un matériau élastique ou souple tel que du caoutchouc,
- le boîtier comporte une face ouverte par laquelle pénètre au moins une partie du rail et un chariot apte à ce déplacer dans le rail, au moins une partie de la bordure délimitant la face ouverte du boîtier étant conformée pour être montée sur au moins une partie de la bordure de l'ouverture de la structure,
- la bordure de la face ouverte du boîtier forme une gorge prévue pour s'engager sur le bord d'une paroi de la structure délimitant l'ouverture,
- le boîtier présente des dimensions supérieures à celles de l'ouverture de la structure, de façon permettre le maintien du boîtier dans l'ouverture par coincement,
- le boîtier est fixé sur la structure du véhicule par vissage et/ou rivetage,
- le fond du boîtier est fixé sur une paroi de la structure du véhicule au moyen d'un ensemble du type vis et écrou
- la portion du fond du boîtier qui est fixée sur la structure du véhicule comporte un insert rigide,
- le boîtier est constitué d'un matériau élastique et/ou souple,
- le boîtier est constitué d'un matériau élastique du type caoutchouc,
- le boîtier est constitué d'un matériau plastique souple ou rigide.

D'autres particularités et avantages apparaîtront à la lecture de la description ci-après, faite en référence aux figures dans lesquelles :
- la figure 1 représente une vue de côté et schématique d'un détail d'un véhicule, illustrant un agencement d'un rail de guidage d'une porte coulissante conforme à l'invention,
- la figure 2 représente une vue en coupe longitudinale de l'agencement, selon la ligne AA de la figure 1,
- la figure 3 représente une vue en coupe transversale de l'agencement, selon la ligne BB de la figure 1,

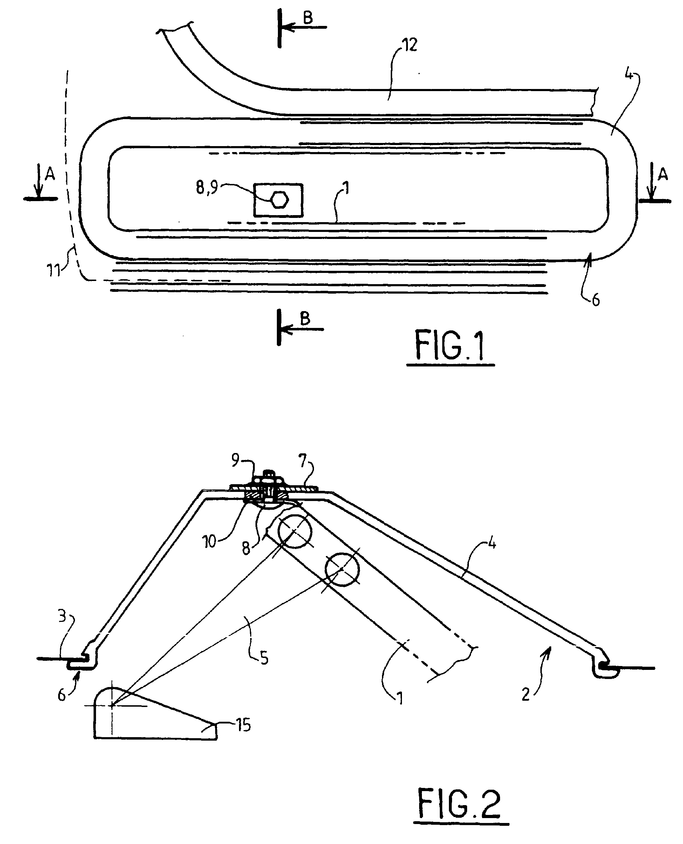

La figure 1 représente une vue d'un détail de la zone d'un véhicule qui est située sous une porte latérale coulissante. Par soucis de simplification, seul le bord avant 11 de la porte est représenté partiellement par une ligne discontinue.

Un rail 1 inférieur de guidage de la porte 11 est située sous le bord inférieur 12 de l'ouverture de porte de l'habitacle. Par soucis de simplification également, le rail 1 est représenté partiellement et schématiquement à la figure 1.

Comme représenté à la figure 2, l'extrémité avant du rail pénètre à l'intérieur de la structure au travers d'une ouverture 2. De cette façon, lorsque la porte 11 est amenée en position fermée, un chariot 5 solidaire de la porte 11 est guidé par le rail 1 au travers la structure 3 du véhicule. Le chariot 5 est fixé sur la porte (non représentée à la figure 2) au moyen d'une chape 15.

Selon l'invention, l'extrémité avant du rail 1 est logée dans un boîtier 4 étanche qui referme également de façon étanche l'ouverture 2 de la structure 3.

Le boîtier 4 a la forme générale d'un volume trapézoïdale. La base du volume trapézoïdal est sensiblement parallèle au plan de la porte 11 et constitue la face ouverte du boîtier 4 par laquelle pénètre le rail 1. Bien entendu, la forme du boîtier 4 n'est pas limitée à l'exemple décrit ci-dessus. Par exemple, le boîtier 4 peut être parallélépipédique ou de toute autre forme permettant d'accueillir le rail 1, tout en assurant l'étanchéité de l'ensemble.

Avantageusement, la bordure 6 de la face ouverte du boîtier 4 peut former une gorge prévue pour s'engager, par exemple par clippage, sur le bord d'une paroi 7 de la structure 3, 7 délimitant l'ouverture 2.

Par ailleurs, le boîtier 4 peut présenter des dimensions supérieures à celles de l'ouverture 2 de la structure 3, 7. De cette façon, le boîtier 4 peut être maintenu dans l'ouverture 2 par coincement.

De préférence, le boîtier 4 est constitué d'un matériau élastique et/ou souple du type, par exemple, caoutchouc. Bien sûr, le boîtier 4 peut être constitué de tout autre matériau approprié comme, par exemple, un matériau plastique souple ou rigide.

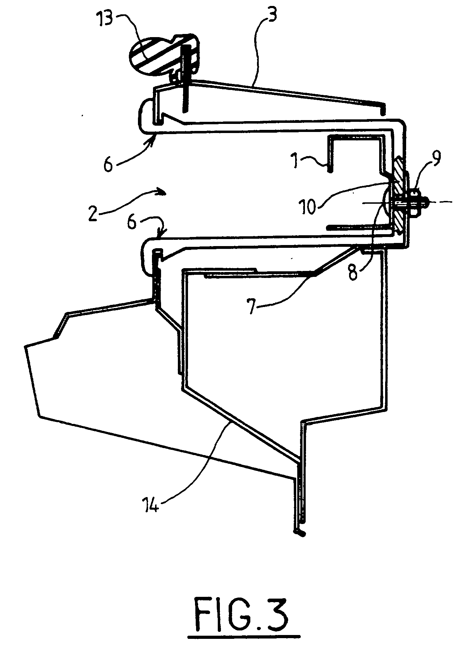

Dans l'exemple de réalisation représenté à la figure 3, la bordure 6 de la face ouverte du boîtier 4 est située sous la portion inférieure du joint d'étanchéité 13 de l'ouverture de porte. De plus, le boîtier 4 est disposé au-dessus du longeron 14 du véhicule.

En coupe transversale selon un plan vertical et perpendiculaire à la direction longitudinale du véhicule, le boîtier 4 présente la forme générale d'un U incliné à 90 degrés environ dans le sens anti-horaire (figure 3). Le fond du U formé par le boîtier 4 est fixé sur une portion verticale d'une paroi 7 de la structure du véhicule au moyen, par exemple, d'un ensemble de fixation du type vis 8 et écrou 9. Plus précisément, le fond du boîtier 4 est fixé sur une tôle 7 constituant un support de fixation pour le rail 1. Le fond du boîtier 4 est pris en sandwich entre d'une part le rail et, d'autre part, une paroi 7 de la structure. C'est-à-dire que l'ensemble de fixation vis 8 et écrou 9 assure simultanément la fixation du rail et du boîtier 4 sur la structure 7.

De préférence, la portion du fond du boîtier 4 qui est fixée sur la structure 7 du véhicule comporte un insert 10 rigide. L'insert rigide 10 est dimensionné pour endurer un serrage important réalisé par l'ensemble vis 8 et écrou 9 entre, d'une part, le rail 1, et, d'autre part, la structure 7. Ainsi, l'insert rigide 10 forme une entretoise qui peut subir des contraintes d'écrasement plus importantes que le reste du boîtier 4.

On conçoit donc aisément que l'agencement d'un rail de guidage d'une porte coulissante de véhicule selon l'invention présente une structure simple et peu coûteuse. Par ailleurs, l'agencement selon l'invention peut être monté aisément, tout en garantissant une bonne étanchéité.

## Revendications

1. Agencement d'un rail de guidage d'une porte coulissante de véhicule dans lequel au moins une partie du rail (1) est située dans un boîtier traversant une ouverture (2) formée dans la structure (3, 7) du véhicule, le boîtier (4) étant sensiblement monobloc et constitué d'un matériau étanche et conformé de façon à obturer l'ouverture (2) de la structure (3, 7) de manière étanche vis-à-vis de l'extérieur, **caractérisé en ce que** le boîtier (4) est constitué d'un matériau non métallique.

2. Agencement selon la revendication 1, **caractérisé en ce que** le boîtier (4) est constitué d'un matériau plastique souple ou rigide.

3. Agencement selon la revendication 1, **caractérisé en ce que** le boîtier (4) est constitué d'un matériau élastique ou souple tel que du caoutchouc.

4. Agencement d'un rail de guidage selon l'une quelconque des revendications 1 à 3, **caractérisé en ce que** le boîtier (4) comporte une face ouverte par laquelle pénètre au moins une partie du rail (1) et un chariot (5) apte à ce déplacer dans le rail (1), au moins une partie de la bordure (6) délimitant la face ouverte du boîtier (4) étant conformée pour être montée sur au moins une partie de la bordure de l'ouverture (2) de la structure (3, 7).

5. Agencement d'un rail de guidage selon la revendication 4, **caractérisé en ce que** la bordure (6) de la face ouverte du boîtier (4) forme une gorge prévue pour s'engager sur le bord d'une paroi (7) de la structure (3, 7) délimitant l'ouverture (2).

6. Agencement d'un rail de guidage selon l'une quelconque des revendications 1 à 5, **caractérisé en ce que** le boîtier (4) présente des dimensions supérieures à celles de l'ouverture (2) de la structure (3, 7), de façon à permettre le maintien du boîtier (4) dans l'ouverture (2) par coincement.

7. Agencement d'un rail de guidage selon l'une quelconque des revendications 1 à 6, **caractérisé en ce que** le boîtier (4) est fixé sur la structure (7) du véhicule par vissage et/ou rivetage.

8. Agencement d'un rail de guidage selon l'une quelconque des revendications 1 à 7, **caractérisé en ce que** le fond du boîtier (4) est fixé sur une paroi (7) de la structure du véhicule au moyen d'un ensemble du type vis (8) et écrou (9).

9. Agencement d'un rail de guidage selon la revendication 8, **caractérisé en ce que** la portion du fond du boîtier (4) qui est fixée sur la structure (7) du véhicule comporte un insert (10) rigide.

## Claims

1. Arrangement of a guide rail of a sliding vehicle door in which at least part of the rail (1) is located in a housing passing through an opening (2) formed in the structure (3, 7) of the vehicle, the housing (4) being substantially single-piece and constituted by an impermeable material shaped so as to block off the opening (2) in the structure (3, 7) so as to be impermeable from the outside, **characterised in that** the housing is constituted by a non-metallic material.

2. Arrangement according to Claim 1, **characterised in that** the housing (4) is constituted by a flexible or rigid plastic material.

3. Arrangement according to Claim 1, **characterised in that** the housing (4) is constituted by a resilient or flexible material such as rubber.

4. Arrangement of a guide rail according to any one of Claims 1 to 3, **characterised in that** the housing (4) comprises an open face through which at least part of the rail penetrates (1) and a carriage (5) capable of being displaced within the rail (1), at least part of the edging (6) delimiting the open face of the housing (4) being shaped so as to be mounted on at least part of the edging of the opening (2) in the structure (3, 7).

5. Arrangement of a guide rail according to Claim 4, **characterised in that** the edging (6) of the open face of the housing (4) forms a throat designed to engage over the edge of a wall (7) of the structure (3, 7) delimiting the opening (2).

6. Arrangement of a guide rail according to any one of Claims 1 to 5, **characterised in that** the housing (4) has larger dimensions than those of the opening (2) in the structure (3, 7), so as to allow the housing (4) to be held in the opening (2) by wedging.

7. Arrangement of a guide rail according to any one of Claims 1 to 6, **characterised in that** the housing (4) is fixed to the structure (7) of the vehicle by screwing and/or riveting.

8. Arrangement of a guide rail according to any one of Claims 1 to 7, **characterised in that** the bottom of the housing (4) is fixed to a wall (7) of the structure of the vehicle by means of an assembly of the screw (8) and nut (9) type.

9. Arrangement of a guide rail according to Claim 8, **characterised in that** the portion of the bottom of the housing (4) that is fixed to the structure (7) of the vehicle comprises a rigid insert (10).

## Patentansprüche

1. Anordnung einer Führungsschiene einer Fahrzeug-Schiebetür, bei der sich mindestens ein Teil der Schiene (1) in einem Gehäuse befindet und eine Öffnung (2) im Aufbau (3, 7) des Fahrzeugs durchquert, wobei das Gehäuse (4) im Wesentlichen aus einem Stück aus dichtem Material gebildet ist und die Öffnung (2) des Aufbaus (3, 7) nach außen hin dicht verschließt, **dadurch gekennzeichnet, dass** das Gehäuse (4) aus nichtmetallischem Material besteht.

2. Anordnung nach Anspruch 1, **dadurch gekennzeichnet, dass** das Gehäuse (4) aus flexiblem oder starrem Kunststoff besteht.

3. Anordnung nach Anspruch 1, **dadurch gekennzeichnet, dass** das Gehäuse (4) aus elastischem oder flexiblem Material wie beispielsweise Gummi besteht.

4. Anordnung einer Führungsschiene nach einem der Ansprüche 1 bis 3, **dadurch gekennzeichnet, dass** das Gehäuse (4) eine offene Vorderseite aufweist, durch die mindestens ein Teil der Schiene (1) und ein in der Schiene (1) beweglicher Schlitten (5) dringen, wobei mindestens ein Teil des Rands (6), der die offene Vorderseite des Gehäuses (4) festlegt, so ausgebildet ist, dass er an mindestens einem Abschnitt des Rands der Öffnung (2) des Aufbaus (3, 7) montiert werden kann.

5. Anordnung einer Führungsschiene nach Anspruch 4, **dadurch gekennzeichnet, dass** der Rand (6) der offenen Vorderseite des Gehäuses (4) einen Hals bildet, der sich am Rand einer Wand (7) des Aufbaus (3, 7) einfügt, welcher die Öffnung (2) festlegt.

6. Anordnung einer Führungsschiene nach einem der Ansprüche 1 bis 5, **dadurch gekennzeichnet, dass** das Gehäuse (4) größere Abmessungen als die Öffnung (2) des Aufbaus (3, 7) aufweist, sodass das Gehäuse (4) durch Einklemmen in der Öffnung (2) gehalten werden kann.

7. Anordnung einer Führungsschiene nach einem der Ansprüche 1 bis 6, **dadurch gekennzeichnet, dass** das Gehäuse (4) durch Schrauben und/oder Nieten am Aufbau (7) des Fahrzeugs befestigt ist.

8. Anordnung einer Führungsschiene nach einem der Ansprüche 1 bis 7, **dadurch gekennzeichnet, dass** der Boden des Gehäuses (4) an einer Wand (7) des Fahrzeugaufbaus mittels einer Einheit aus Schraube (8) und Mutter (9) befestigt ist.

9. Anordnung einer Führungsschiene nach Anspruch 8, **dadurch gekennzeichnet, dass** der Abschnitt des Bodens des Gehäuses (4), der am Aufbau (7) des Fahrzeugs befestigt ist, einen starren Einsatz (10) aufweist.
